# EUROPEAN PATENT APPLICATION

(11) **EP 4 726 540 A1**
(43) Date of publication of application: **15.04.2026**
(21) Application number: 24818748.6
(22) Date of filing: 06.06.2024
(51) Int. Cl.: G06F 9/451

(54) **INFORMATION PRESENTATION METHOD AND ELECTRONIC SHELF LABEL DEVICE**

(30) Priority: 06.06.2023 CN 202310664528
(71) Applicant: HEMA (CHINA) CO., LTD., Shanghai 200135 (CN)
(72) Inventor: SONG, Enliang, Shanghai 200125 (CN)
(74) Representative: Viering, Jentschura & Partner mbB Patent- und Rechtsanwälte
(86) International application number: PCT/CN2024/097859
(87) International publication number: WO 2024/251217

(57) **Abstract**

Embodiments of this application disclose an information presentation method and an electronic shelf label device. The method is applied to an application program deployed in an electronic shelf label device. A microcontroller unit MCU and a storage unit are deployed in the electronic shelf label device. The storage unit includes a first flash memory unit supporting a first reading speed and a second flash memory unit supporting a second reading speed. The first reading speed is greater than the second reading speed. The method includes: receiving target data to be presented by the electronic shelf label device, where the target data includes first data related to presentation of a dynamic image; storing the first data into the first flash memory unit; and presenting the dynamic image in a first region in a screen of the electronic shelf label device by reading the first data stored in the first flash memory unit. According to the embodiments of this application, costs of the electronic shelf label device can be controlled when the dynamic image is presented.

## Description

This application claims priority to Chinese Patent Application No. 202310664528.8, filed with the China National Intellectual Property Administration on June 6, 2023 and entitled "INFORMATION PRESENTATION METHOD AND ELECTRONIC SHELF LABEL DEVICE", which is incorporated herein by reference in its entirety.

### TECHNICAL FIELD

This application relates to the technical field of electronic shelf label devices, and in particular, to an information presentation method and an electronic shelf label device.

### BACKGROUND

An ESL(Electronic Shelf Label) device, also referred to as an electronic price tag, is an electronic display apparatus with an information sending and receiving function, and is an electronic tag that shows price information and mainly used in a supermarket, a convenience store, a pharmacy, or the like. The electronic shelf label device is usually disposed on a shelf, and can replace a conventional paper price label. Each electronic shelf label device is connected to a computer database by using a wired or wireless network, and displays latest commodity information on a screen of the electronic shelf label device.

In a conventional implementation, the screen of the electronic shelf label device is usually an electronic ink screen. The electronic ink screen is a screen based on an electronic paper display technology, and this screen has advantages such as low power consumption (where a battery is usually used to supply power), being environmental-friendly and low-carbon, and having a low price. However, due to an operating principle of the electronic ink screen, a refresh rate of the electronic ink screen is excessively low, which cannot satisfy presentation of dynamic content (such as an animation or a video). As a result, the electronic ink screen can usually be used to present only static text content such as a commodity name or a price.

In addition, an LCD (Liquid Crystal Display) is also used in the art as application of the screen of the electronic shelf label device. The LCD can theoretically support presentation of dynamic content. However, during actual implementation, costs of the electronic shelf label device may be consequently increased greatly, and cannot satisfy a requirement for cost control in a large-scale deployment scenario.

### SUMMARY

This application provides an information presentation method and an electronic shelf label device, so that costs of the electronic shelf label device can be controlled when a dynamic image is presented by the electronic shelf label device.

This application provides the following solutions.

An information presentation method is provided. The method is applied to an application program deployed in an electronic shelf label device. A microcontroller unit MCU and a storage unit are deployed in the electronic shelf label device. The storage unit includes a first flash memory unit supporting a first reading speed and a second flash memory unit supporting a second reading speed. The first reading speed is greater than the second reading speed. The method includes:
receiving target data to be presented by the electronic shelf label device, where the target data includes first data related to presentation of a dynamic image;
storing the first data into the first flash memory unit; and
presenting the dynamic image in a first region in a screen of the electronic shelf label device by reading the first data stored in the first flash memory unit, where the second flash memory unit is configured to store second data related to static content, and the static content is configured to be presented in a second region in the screen of the electronic shelf label device.

The received target data further includes the second data related to presentation of the static content.

The method further includes:
storing the second data into the second flash memory unit, and presenting the static content in the second region in the screen of the electronic shelf label device by reading the second data in the second flash memory unit.

The first data related to the presentation of the dynamic image includes: an image sequence including format data of a target quantity of images.

Presenting the dynamic image in the first region in the screen of the electronic shelf label device includes:
sequentially performing content refreshing on the images in the image sequence based on a target time interval in a cyclic manner, to form a dynamic image effect, and presenting the dynamic image effect in the first region in the screen of the electronic shelf label device.

Color space of the images in the image sequence is represented by using a binary number having a target bit quantity, and the target quantity of the images and the target bit quantity are related to a size of storage space and/or a data reading speed of the first flash memory unit.

The first data related to the presentation of the dynamic image further includes: the target time interval set for the image sequence.

Sequentially performing content refreshing on the images in the image sequence based on the target time interval in the cyclic manner includes:
sequentially performing content refreshing on the images in the image sequence based on the set target time interval in the cyclic manner.

The first data related to the presentation of the dynamic image further includes: information about cycle intermission duration set for the image sequence.

Sequentially performing content refreshing on the images in the image sequence based on the target time interval in the cyclic manner includes:
cyclically presenting the image sequence based on the information about the cycle intermission duration, where the information about the cycle intermission duration is information about intermission duration between two adjacent cycles.

The first data related to the presentation of the dynamic image further includes: information about a presentation frequency set for the dynamic image.

Presenting the dynamic image in the first region in the screen of the electronic shelf label device includes:
presenting the dynamic image in the first region in the screen of the electronic shelf label device based on the set presentation frequency.

The first data related to the presentation of the dynamic image further includes: information about a range of the first region which is set for the dynamic image.

Presenting the dynamic image in the first region in the screen of the electronic shelf label device includes:
presenting the dynamic image in the set range of the first region in the screen of the electronic shelf label device.

The first data related to the presentation of the dynamic image further includes: information about a wandering path set for the dynamic image.

Presenting the dynamic image in the first region in the screen of the electronic shelf label device includes:
presenting, in the first region, an effect that a position of the dynamic image changes according to the wandering path.

An electronic shelf label device is provided.

A microcontroller unit MCU and a storage unit are deployed in the electronic shelf label device. The storage unit includes a first flash memory unit supporting a first reading speed and a second flash memory unit supporting a second reading speed. The first reading speed is greater than the second reading speed.

The storage unit stores an application program. The application program is run based on the MCU, and performs the following processing:
receiving target data to be presented by the electronic shelf label device, where the target data includes first data related to presentation of a dynamic image;
storing the first data into the first flash memory unit; and
presenting the dynamic image in a first region in a screen of the electronic shelf label device by reading the first data stored in the first flash memory unit, where the second flash memory unit is configured to store second data related to static content, and the static content is configured to be presented in a second region in the screen of the electronic shelf label device.

The storage unit of the electronic shelf label device further includes a random access memory RAM, configured to store a wireless communication protocol stack and/or variant data required during running of the application program.

The screen of the electronic shelf label device is a liquid crystal display LCD screen.

An information presentation apparatus is provided. The apparatus is applied to an application program deployed in an electronic shelf label device. A microcontroller unit MCU and a storage unit are deployed in the electronic shelf label device. The storage unit includes a first flash memory unit supporting a first reading speed and a second flash memory unit supporting a second reading speed. The first reading speed is greater than the second reading speed. The apparatus includes:
a data receiving unit, configured to receive target data to be presented by the electronic shelf label device, where the target data includes first data related to presentation of a dynamic image;
a data storage unit, configured to store the first data into the first flash memory unit; and
a dynamic image presentation unit, configured to present the dynamic image in a first region in a screen of the electronic shelf label device by reading the first data stored in the first flash memory unit, where the second flash memory unit is configured to store second data related to static content, and the static content is configured to be presented in a second region in the screen of the electronic shelf label device.

A computer-readable storage medium is provided, storing a computer program. When the program is executed by a processor, steps of the method in any one of the foregoing aspects are implemented.

According to the specific embodiments provided in this application, this application discloses the following technical effects.

According to embodiments of this application, the dynamic image can be presented by the electronic shelf label device. In addition, because the dynamic image can be presented in only a part of regions in the screen, and the static content can be presented in another part, a storage structure of the electronic shelf label device may include the first flash memory unit supporting the first reading speed and the second flash memory unit supporting the second reading speed. In this way, the first flash memory unit stores content related to the dynamic image, to support a refresh rate of the dynamic image. For the second data related to the static content, because no frequent refresh operation is related during presentation, the second data may be stored in the second flash memory unit with the lower speed. In this manner, the dynamic image can be presented by the electronic shelf label device, to improve value proposition of the electronic shelf label device, improve a digitalization capability of a brick-and-mortar shop, and avoid excessively high costs of the electronic shelf label device, thereby facilitating implementation of large-scale deployment in a large brick-and-mortar shop.

In addition, in a preferred implementation, when the dynamic image is specifically presented, the plurality of images may be cyclically presented based on the time interval, to achieve the dynamic image effect. In this way, the specific first data related to the dynamic image may be image format data, to further reduce a requirement on the storage space of the first flash memory unit. Further, in the specific image format data, the color space of the images may be represented by using the binary number having the target bit quantity, to further reduce the requirement on the storage space of the first flash memory unit, thereby better facilitating controlling the costs of the electronic shelf label device.

Certainly, any product for implementing this application is not necessarily required to achieve all of the above advantages simultaneously.

### BRIEF DESCRIPTION OF THE DRAWINGS

To describe the technical solutions in embodiments of this application or the related art more clearly, the accompanying drawings required for describing the embodiments are briefly described below. It is clear that the accompanying drawings in the following descriptions are merely some embodiments of this application, and a person of ordinary skill in the art may further derive other drawings based on the accompanying drawings without creative efforts.
FIG. 1 is a schematic diagram of a system architecture according to an embodiment of this application;
FIG. 2 is a flowchart of a method according to an embodiment of this application;
FIG. 3 is a schematic diagram of an interface of an electronic shelf label according to an embodiment of this application;
FIG. 4 is a schematic diagram of an electronic shelf label according to an embodiment of this application; and
FIG. 5 is a schematic diagram of an apparatus according to an embodiment of this application.

### DETAILED DESCRIPTION

The technical solutions of embodiments of this application are clearly and completely described below with reference to the accompanying drawings of the embodiments of this application. It is clear that the described embodiments are a part of the embodiments of this application, rather than all of the embodiments. All other embodiments obtained by a person of ordinary skill in the art based on the embodiments of this application shall fall within the protection scope of this application.

In the embodiments of this application, to enable an electronic shelf label device to have, in addition to a price display capability, a capability of supporting presentation of a dynamic image in a scenario such as a marketing activity, so that a digitalization capability of a shop is improved, and costs of the electronic shelf label device is not excessively high, a corresponding solution is provided. In this solution, first, to support the presentation of a dynamic image, in terms of a screen, a screen of a type such as LCD may be selected for use. In terms of a data storage unit, after a service end delivers data that needs to be specifically presented to a gateway device (which may be a gateway device in which wireless communication capabilities such as Wi-Fi and Bluetooth are integrated) of a shop, the gateway device may send the data to a specific electronic shelf label device in a manner such as wireless transmission. Thus, the electronic shelf label device needs to cache the received data in a local storage unit of the electronic shelf label device, and then read the data from the storage unit for presentation. In the embodiments of this application, to support the presentation of the dynamic image, a flash memory unit (which may also be referred to as a flash memory, having an English name being Flash Memory) supporting a high reading speed may be used in the electronic shelf label device for data storage, to satisfy a requirement on a refresh speed of a single-frame image during the presentation of the dynamic image. However, costs of the high-speed flash memory unit are in direct proportion to storage space. Therefore, the storage space of the flash memory unit supporting the high reading speed cannot be excessively large (especially when a clock rate of a microcontroller in the electronic shelf label device in not very high); otherwise, it is difficult to control costs.

In view of the foregoing condition, in the embodiments of this application, a solution of presenting the dynamic image in only a part of regions in the screen of the electronic shelf label device may be used, and presentation may still be performed in the other part of the regions in a manner of static content. For example, information such as a commodity name or a price may be presented in the manner of static content, and the dynamic image is presented in only a part of the regions in the screen. In this way, because a size of the dynamic image that needs to be presented in the screen becomes smaller, an amount of data required in the storage unit of the electronic shelf label device becomes smaller, and a requirement on the storage space of the storage unit also becomes smaller. For the part presenting static content, because a refresh rate is not involved during the presentation, only a flash memory unit supporting a low reading speed needs to be used for data storage. In this way, the storage unit of the electronic shelf label device may be implemented by using a structure with a part being a low-speed flash memory unit (that is, a flash memory unit supporting a low reading speed) and a part being a high-speed flash memory unit (that is, a flash memory unit supporting a high reading speed). Data related to the static content may be stored in the low-speed flash memory unit, and data related to the dynamic image may be stored in the high-speed flash memory unit, to implement the presentation of the dynamic image by using the electronic shelf label device without causing excessively high costs of the electronic shelf label device.

Certainly, to control usage of internal storage space of the electronic shelf label device, a corresponding application program may further be provided. The application program may be stored in the electronic shelf label device. The application program is run by using an MCU (Microcontroller Unit, that is a processor in the electronic shelf label device) in the electronic shelf label device. The usage of the storage space is controlled by using the application program. That is, after specific data is received, the application program may be used to store the data related to the static content in the low-speed flash memory unit, store the data related to the dynamic image in the high-speed flash memory unit, and the like. In addition, the data may also be read and presented by using the application program.

In addition, to reduce occupation in storage space of the high-speed flash memory unit, a specific dynamic image may be implemented by sequentially playing, in a cyclic manner, an image sequence including a plurality of images (for example, eight images). In this way, the data related to the specific dynamic image may refer to data of the images in the image sequence. Specifically, at the electronic shelf label device, the images in the sequence may be refreshed and presented based on a time interval, to present a presentation effect of the dynamic image. The time interval may be set based on an actual requirement, and certainly needs to be controlled within a range of the reading speed supported by the high-speed flash memory unit. For example, assuming that the reading speed supported by the high-speed flash memory unit is 1 mS/kBytes, and a data amount of a single-frame image is 100 kBytes, that is at least 100 ms is required to refresh the single-frame image. In this case, the time interval may be set to 100 ms or more.

In addition, to further reduce the occupation in the storage space of the high-speed flash memory unit, color space of the images in the specific image sequence may be represented by using a binary number having a bit quantity. For example, the bit quantity may be 16. In this case, the color space of the images may be limited to be within 256 colors, to avoid a case in which the storage space of the high-speed flash memory unit cannot satisfy a storage requirement due to excessive occupation in the storage space.

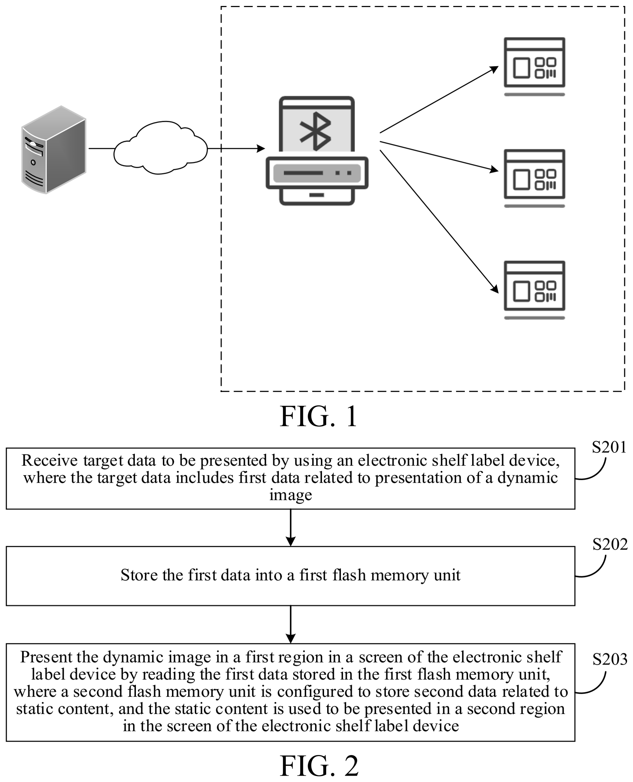

From a perspective of a system architecture, refer to FIG. 1, an embodiment of this application relates to an electronic shelf label device. Specifically, the device may include at least an MCU and a storage unit. To reduce power consumption or the like, a working clock rate of the MCU may be low, for example, may be 48M or 64M. In addition, the storage unit may include a first flash memory unit supporting a high reading speed, to store data related to a dynamic image, and a second flash memory unit supporting a low reading speed, to store data related to static content. In an optional manner, the storage unit may further include an RAM (Random Access Memory) unit. To control costs, storage space of the RAM unit may also be small, and may be configured to store only data such as a wireless communication protocol or related parameters during running of an application program. In addition, an application program used to control usage of internal storage space of the electronic shelf label device may further be provided. The application program may be stored in the storage unit, for example, may be stored in the first flash memory unit or the second flash memory unit, and the application program is run by using the MCU. The application program may be fixed to the electronic shelf label device before delivery of the electronic shelf label device, or the application program may be installed in the electronic shelf label device in a manner such as OTA (Over-the-Air Technology).

Specific data includes the data related to the static content, the data related to the dynamic image, and the like. The specific data may be provided by a service end (specifically, may be produced by the service end, or may be produced by another content producer, and submitted to the service end for release). The service end may send the specific data to a gateway device deployed in a brick-and-mortar shop. The specific data may further be associated with information such as a MAC (Media Access Control Address) of the electronic shelf label device. After receiving the data, the gateway device may send the data to the corresponding electronic shelf label device based on the information about the MAC address in a manner such as wireless communication. The application program in the electronic shelf label device may store, read, and present the data in the foregoing manner.

Specific implementation solutions provided in the embodiments of this application are described in detail below.

### Embodiment 1

From a perspective of the foregoing application program, Embodiment 1 first provides an information presentation method. An MCU and a storage unit are deployed in an electronic shelf label device. The storage unit includes a first flash memory unit supporting a first reading speed and a second flash memory unit supporting a second reading speed. The first reading speed is greater than the second reading speed. Specifically, refer to FIG. 2, the method may include the following steps performed by an application program run based on the MCU.

S201: Receive target data to be presented by the electronic shelf label device, where the target data includes first data related to presentation of a dynamic image.

As described above, the target data may be provided by a service end, and sent to the specific electronic shelf label device in a manner such as wireless transmission through a gateway device deployed in a brick-and-mortar shop. Specifically, the target data may include the first data related to the presentation of the dynamic image. In addition, in some cases, the target data may further include second data related to presentation of static content. The static content may be specifically information related to a title, a price, or the like of a commodity. This kind of information may be presented in a static manner, and may specifically exist in a form such as a text. The dynamic image may be specifically an image that is related to a marketing activity or the like and that needs to be dynamically presented. For example, the dynamic image is an image sequence presented in a form of an animation.

It should be noted herein that, in the embodiments of this application, regardless of whether the target data provided by the service end includes the second data related to the static content, the specific dynamic image may be presented in only a part of regions in a screen of the electronic shelf label device, and the other part of the regions may be used to present the static content, to control costs of the electronic shelf label device. However, during specific implementation, when the service end provides the related data to the electronic shelf label device, the first data related to the dynamic image and the second data related to the static content may not be simultaneously delivered. For example, when a dynamic image presented in an electronic shelf label device needs to be updated, or when static content is already presented in an electronic shelf label device and presentation of a dynamic image needs to be added to the electronic shelf label device, the service end may provide only first data related to the dynamic image. Certainly, if the service end simultaneously completes preparation of the first data and the second data, the first data and the second data may be simultaneously delivered to the electronic shelf label device for presentation. In addition, the service end may alternatively update only the static content. In this case, the target data provided by the service end may alternatively include only the second data related to the static content, and the like.

The first data related to the dynamic image may specifically exist as data in a format such as an animation or a video. Alternatively, in a preferred implementation, to reduce occupation in storage space, a plurality of images may be played frame by frame to achieve a dynamic image effect. In this case, the specific first data related to the dynamic image may include image data corresponding to the plurality of images. In other words, in the embodiments of this application, the specific first data may be data in an image format such as a plurality of bmps (Bitmaps), instead of data in a format of an animation or a video, to reduce the occupation in the storage space. The plurality of images are produced in a plurality of manners. For example, in one manner, the dynamic image presented in the screen of the electronic shelf label device may be specifically movement (for example, plane rotation, three-dimensional rotation, zooming, or mirroring) of one image in accordance with a certain form. In this case, the plurality of images may be obtained through calculation based on one basic image. For example, if the manner of three-dimensional rotation is used, a plurality of images at different angles may be calculated by using an algorithm, and the images at different angles may form the image sequence. A production process of the data may be completed at the service end, or may be produced by a related content producer and released to the service end, and specifying information such as an identifier of an associated commodity.

For the first data existing in the manner of the image sequence, to further reduce the occupation in the storage space, color space of the images in the image sequence may further be required to be represented by using a binary number having a target bit quantity. In other words, in the embodiments of this application, to better control the costs, a data producer may further be required to represent the color space of the images by using the binary number having the bit quantity. For example, the bit quantity may be specifically 16. In this case, the color space of the images may be limited to be within 256 colors, to avoid a case in which the storage space of the high-speed flash memory unit cannot satisfy a storage requirement due to excessive occupation in the storage space, or the like.

A target quantity of the images in the image sequence and the target bit quantity are related to a size of the storage space and/or a data reading speed of the high-speed flash memory unit. For example, for the image represented by the binary number having 16 bits, a data amount of a single image may be 16 kBytes. Assuming that the image sequence includes eight images, a data amount of one piece of first data is 8 * 16=128 kBytes. In this case, the storage space of the high-speed flash memory unit only needs to be greater than or equal to 128 kBytes. During specific implementation, after the delivery of the electronic shelf label device, the storage space of the high-speed flash memory unit is usually fixed. Therefore, a maximum length of a supportable image sequence can be determined based on the size of the storage space and a data amount of each image. For example, assuming that the storage space of the high-speed flash memory unit is 128 kBytes, and the data amount of each image is 16 kBytes, the maximum length of the image sequence is 8. In other words, when the first data is actually produced, the quantity of the images in the image sequence may be controlled to be within 8, or the like.

In addition, when the image sequence is presented, content refresh and presentation need to be sequentially performed on the images based on a time interval. In this case, the time interval may be a preset fixed value, or may be personalized based on specific requirements of the dynamic image. In other words, for the latter, the specific first data may further include information about the time interval, so that the application program can refresh and present the images based on the time interval.

Certainly, regardless of the manner, the specific time interval may be related to the data reading speed of the high-speed flash memory unit. For example, if a data amount of a single image is 16 kBytes, and the reading speed supported by the high-speed flash memory unit is 1 mS/kBytes, at least 16 ms is required to complete refresh of one frame of image. In this case, a time interval between two adjacent frames of images needs to be greater than or equal to 16 ms; otherwise, the reading speed of the high-speed flash memory unit may not satisfy a requirement for faster refresh. During actual application, the time interval between two frames of images may be usually set to be greater than 16 ms, for example, may be 100 ms, etc., to reduce a requirement on the reading speed of the high-speed flash memory unit when a dynamic effect is achieved.

In addition, the quantity of the images in the image sequence is limited. Therefore, during presentation of the dynamic image, a manner of cyclically presenting the images in the image sequence may be used, that is, the images in the image sequence are sequentially presented in each cycle, and then, a next cycle starts. Intermission duration may exist between different cycles. The intermission duration may be a preset fixed value, or may be data personalized based on a specific condition of the dynamic image. For the latter, the specific first data may further carry information about the cycle intermission duration, so that the application program can perform cyclic presentation based on the set cycle intermission duration.

In addition, during actual applications, the specific dynamic image may alternatively be presented based on a certain frequency instead of being always presented in the screen of the electronic shelf label device. For example, the dynamic image may be presented once every 10 minutes, and presented for one minute each time. The presentation frequency may also be a preset fixed value, or may be a presentation frequency set based on a specific requirement of the dynamic image. In this case, the first data may further carry related information about the presentation frequency. Correspondingly, the specific application program performs presentation based on the set presentation frequency.

The specific dynamic image needs to be presented in a region range in the screen of the electronic shelf label device, and the region range may be a preset fixed value, or may be set based on a specific presentation requirement or the like of the dynamic image. For the latter, the specific first data may further include information about the region range. The information about the region range may be specified via coordinates. For example, for a screen having a resolution of 320 * 240, the region range may be set to a coordinate region using (200, 100) as a start point and having 100 pixels horizontally and 80 pixels vertically.

In addition, during specific presentation, a wandering mode of the dynamic image may also be supported. To be specific, a center point of the dynamic image may not be fixed at a position in the region range, but may change in position in the region range according to a path. For example, the center point may wander from a lower left corner of the specific region range to an upper right corner, then to an upper left corner, then to a lower right corner, and then go back to the lower left corner. In this case, the specific first data may further include specific information about the wandering path, so that the application program can present the dynamic image according to the specific wandering path.

S202: Store the first data into the first flash memory unit.

After the target data is received, the data may be cached by the local storage unit of the electronic shelf label device. In this case, the first data may be stored into the first flash memory unit. If the second data related to the static content further exists, the second data may further be stored into the second flash memory unit. During specific implementation, the first data and the second data provided by the service end may correspond to information such as a type identifier. After receiving the specific target data, the application program may identify the first data and the second data based on the type identifier, and separately store the first data and the second data.

S203: Present the dynamic image in a first region in the screen of the electronic shelf label device by reading the first data stored in the first flash memory unit, where the second flash memory unit is configured to store the second data related to the static content, and the static content is configured to be presented in a second region in the screen of the electronic shelf label device.

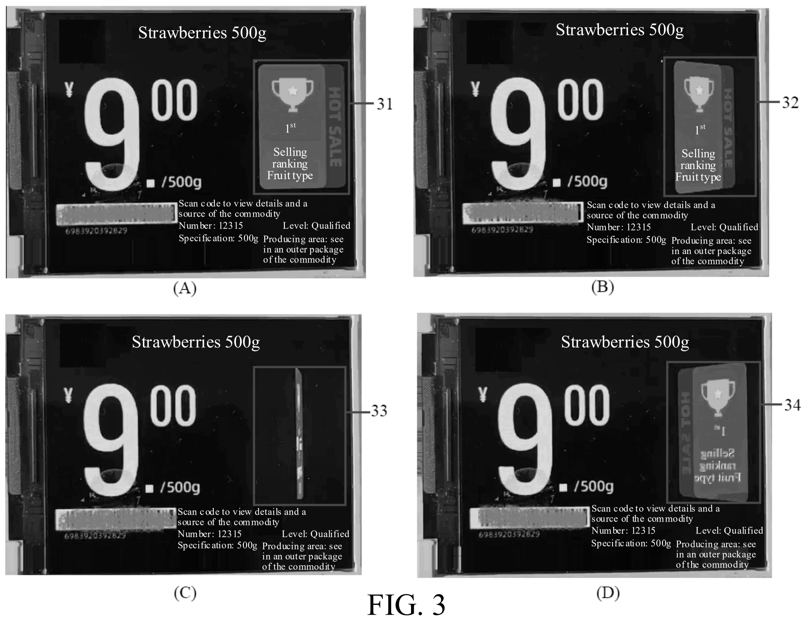

After the storage of the target data is completed, the data in the storage unit may be read to complete a presentation process. Specifically, the dynamic image may be presented in the first region in the screen of the electronic shelf label device by reading the first data stored in the first flash memory unit. In addition, if the second data further exists, the static content may further be presented in the second region in the screen of the electronic shelf label device by reading the second data stored in the second flash memory unit. For example, a presentation status in a screen of an electronic shelf label device at a first moment may be shown in FIG. 3A. A region shown by 31 may be the first region, used to present content related to a dynamic image. A region other than the first region is the second region, used to present static content, including a price, a name, a barcode, and the like. An image in the first region is dynamic. For example, in the example shown in FIG. 3A, the dynamic image may be dynamically changed in a three-dimensional rotation manner. At a second moment, the presentation status in the screen may be shown at 32 in FIG. 3B. It can be seen that the image is clockwise rotated by an angle. At a third moment, the presentation status in the screen may be shown at 33 in FIG. 3C. It can be seen that the image continues to be clockwise rotated by an angle. At a fourth moment, the presentation status in the screen may be shown at 34 in FIG. 3D. It can be seen that the image continues to be clockwise rotated to a "reverse side" state, and can return to the state shown at 31 in FIG. 3A if continuing to be rotated. The image is cyclically presented in this way.

As described above, the specific first data related to the presentation of the dynamic image may include the image sequence including the target quantity of images. In this case, content refreshing may be sequentially performed on the images in the image sequence based on a target time interval in a cyclic manner, to form a dynamic image effect, and the dynamic image effect is presented in the first region in the screen of the electronic shelf label device.

If the first data further includes the target time interval set for the image sequence, content refreshing may be sequentially performed on the images in the image sequence based on the set target time interval in the cyclic manner. In this way, when the dynamic image is presented on different electronic shelf labels, time intervals between each of the images may be different.

If the first data further includes information about cycle intermission duration set for the image sequence, the image sequence may be cyclically presented based on the information about the cycle intermission duration, where the information about the cycle intermission duration is information about intermission duration between two adjacent cycles. In other words, the image sequence specifically includes eight images. After one round of sequential presentation is completed, a next round of presentation may be performed after duration of N seconds. N herein may be set based on a specific requirement of the dynamic image.

In addition, if the first data further includes information about a presentation frequency set for the dynamic image, the dynamic image may be presented in the first region in the screen of the electronic shelf label device based on the set presentation frequency. In other words, the specific dynamic image may be presented at regular intervals. The specific presentation frequency may be fixed, or may be set based on a specific requirement of the dynamic image.

In addition, if the first data further includes information about a range of the first region which is set for the dynamic image, the dynamic image may be presented in the set range of the first region. If the first data further includes information about a wandering path set for the dynamic image, an effect that a position of the dynamic image changes according to the wandering path may be presented in the first region.

It should be noted that, in the embodiments of this application, the specific screen of the electronic shelf label device may be an LCD screen or the like. During specific implementation, power may be supplied to the electronic shelf label device in an active manner. That is, an external power supply may be provided for the electronic shelf label device in a cabling manner in a brick-and-mortar shop, to satisfy an electricity demand in an information presentation process of the electronic shelf label device.

In conclusion, according to the embodiments of this application, the dynamic image can be presented by the electronic shelf label device. In addition, because the dynamic image can be presented in only a part of regions in the screen, and the static content can be presented in another part, a storage structure of the electronic shelf label device may include the first flash memory unit supporting the first reading speed and the second flash memory unit supporting the second reading speed. In this way, the first flash memory unit stores content related to the dynamic image, to support a refresh rate of the dynamic image. For the second data related to the static content, because no frequent refresh operation is related during presentation, the second data may be stored in the second flash memory unit with the lower speed. In this manner, the dynamic image can be presented by the electronic shelf label device, to improve value proposition of the electronic shelf label device, improve a digitalization capability of a brick-and-mortar shop, and avoid excessively high costs of the electronic shelf label device, thereby facilitating implementation of large-scale deployment in a large brick-and-mortar shop.

In addition, in a preferred implementation, when the dynamic image is specifically presented, the plurality of images may be cyclically presented based on the time interval, to achieve the dynamic image effect. In this way, the specific first data related to the dynamic image may be image format data, to further reduce a requirement on the storage space of the first flash memory unit. Further, in the specific image format data, the color space of the images may be represented by using the binary number having the target bit quantity, to further reduce the requirement on the storage space of the first flash memory unit, thereby better facilitating controlling the costs of the electronic shelf label device.

### Embodiment 2

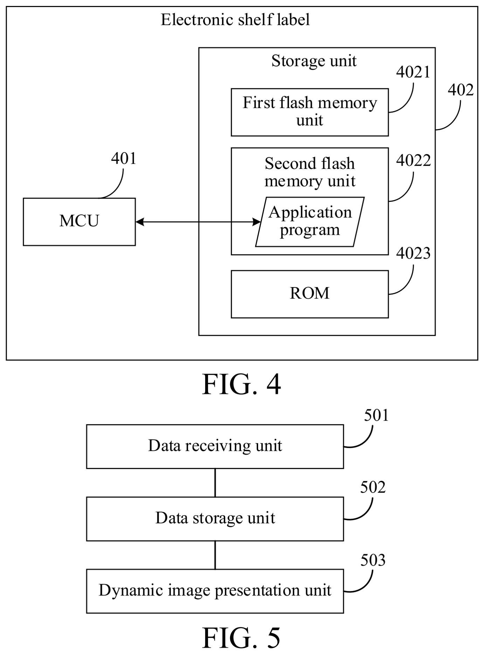

Embodiment 2 provides an electronic shelf label device. Refer to FIG. 4, a microcontroller unit MCU 401 and a storage unit 402 are deployed in the electronic shelf label device. The storage unit includes a first flash memory unit 4021 supporting a first reading speed and a second flash memory unit 4022 supporting a second reading speed. The first reading speed is greater than the second reading speed.

The storage unit 402 stores an application program (which may be specifically stored in the first flash memory unit or the second flash memory unit, where an example in which the application program is stored in the second flash memory unit is used for introduction in FIG. 4). The application program is run based on the MCU, and performs the following processing:
receiving target data to be presented by the electronic shelf label device, where the target data includes first data related to presentation of a dynamic image;
storing the first data into the first flash memory unit; and
presenting the dynamic image in a first region in a screen of the electronic shelf label device by reading the first data stored in the first flash memory unit, where the second flash memory unit is configured to store second data related to static content, and the static content is configured to be presented in a second region in the screen of the electronic shelf label device.

In an optional manner, the storage unit of the electronic shelf label device may further include a random access memory RAM 4023, configured to store a wireless communication protocol stack and/or variant data required during running of the application program.

Specifically, the screen of the electronic shelf label device is a liquid crystal display LCD screen.

For a part that is not described in detail in Embodiment 2, refer to the descriptions in Embodiment 1, and details are not described herein again.

It should be noted that embodiments of this application may involve use of user data. During actual application, user-specific personal data may be used in the solutions described in this specification when requirements of applicable laws and regulations of a host country are satisfied (for example, a user explicitly agrees, or the user is actually notified) within a scope allowed by the applicable laws and regulations.

Corresponding to Embodiment 1, an embodiment of this application further provides an information presentation apparatus. A microcontroller unit MCU and a storage unit are deployed in an electronic shelf label device. The storage unit includes a first flash memory unit supporting a first reading speed and a second flash memory unit supporting a second reading speed. The first reading speed is greater than the second reading speed. The apparatus is applied to an application program run based on the MCU. Referring to FIG. 5, the apparatus may include:
a data receiving unit 501, configured to receive target data to be presented by the electronic shelf label device, where the target data includes first data related to presentation of a dynamic image;
a data storage unit 502, configured to store the first data into the first flash memory unit; and
a dynamic image presentation unit 503, configured to present the dynamic image in a first region in a screen of the electronic shelf label device by reading the first data stored in the first flash memory unit, where the second flash memory unit is configured to store second data related to static content, and the static content is configured to be presented in a second region in the screen of the electronic shelf label device.

The received target data further includes the second data related to presentation of the static content.

The data storage unit may further be configured to store the second data into the second flash memory unit, and present the static content in the second region in the screen of the electronic shelf label device by reading the second data in the second flash memory unit.

The first data related to the presentation of the dynamic image includes: an image sequence including format data of a target quantity of images.

The dynamic image presentation unit may be specifically configured to:
sequentially perform content refreshing on the images in the image sequence based on a target time interval in a cyclic manner, to form a dynamic image effect, and present the dynamic image effect in the first region in the screen of the electronic shelf label device.

Color space of the images in the image sequence may be represented by using a binary number having a target bit quantity, and the target quantity of the images and the target bit quantity are related to a size of storage space and/or a data reading speed of the first flash memory unit.

In addition, the first data related to the presentation of the dynamic image may further include: the target time interval set for the image sequence.

In this case, the dynamic image presentation unit may be specifically configured to:
sequentially perform content refreshing on the images in the image sequence based on the set target time interval in the cyclic manner.

In addition, the first data related to the presentation of the dynamic image further includes: information about cycle intermission duration set for the image sequence.

In this case, the dynamic image presentation unit may be specifically configured to:
cyclically present the image sequence based on the information about the cycle intermission duration, where the information about the cycle intermission duration is information about intermission duration between two adjacent cycles.

In addition, the first data related to the presentation of the dynamic image may further include: information about a presentation frequency set for the dynamic image.

In this case, the dynamic image presentation unit may be specifically configured to: present the dynamic image in the first region in the screen of the electronic shelf label device based on the set presentation frequency.

During specific implementation, the first data related to the presentation of the dynamic image may further include: information about a range of the first region which is set for the dynamic image.

In this case, the dynamic image presentation unit may be specifically configured to:
present the dynamic image in the set range of the first region in the screen of the electronic shelf label device.

In addition, the first data related to the presentation of the dynamic image may further include: information about a wandering path set for the dynamic image.

In this case, the dynamic image presentation unit may be specifically configured to:
present, in the first region, an effect that a position of the dynamic image changes according to the wandering path.

In addition, an embodiment of this application further provides a computer-readable storage medium, storing a computer program. When the program is executed by a processor, steps of the method according to any one of the foregoing method embodiments are implemented.

It may be learned from description of the foregoing implementations that, a person skilled in the art may clearly understand that this application may be implemented by using software and a necessary universal hardware platform. Based on such understanding, the technical solutions in this application essentially or the part contributing to the prior art may be implemented in the form of a software product. The computer software product may be stored in a storage medium, such as a ROM/RAM, a magnetic disk, or an optical disc, and includes several instructions for instructing a computer device (which may be a personal computer, a server, a network device, or the like) to perform the methods described in the embodiments or some parts of the embodiments of this application.

The embodiments of this specification are all described in a progressive manner. For same or similar parts in the embodiments, reference can be made to each other, and descriptions of each embodiment focus on a difference from other embodiments. Especially, a system or a system embodiment is basically similar to the method embodiments, and therefore is described briefly. Related parts can refer to partial descriptions in the method embodiments. The system and the system embodiment described above are merely illustrative. The units described as separate components may or may not be physically separate, and the components shown as units may or may not be physical units, i.e. may be located at a same place, or may be distributed to multiple network units. A part of or all of the modules may be selected according to the actual needs to achieve the objectives of the solutions of the embodiments. A person of ordinary skill in the art may understand and implement the embodiments without creative efforts.

The information presentation method and the electronic shelf label device provided in this application are described above in detail. Although the principles and implementations of this application are described by using specific examples in this specification, the descriptions of the foregoing embodiments are merely intended to help understand the method and the core idea of the method of this application. Meanwhile, a person of ordinary skill in the art may make modifications to the specific implementations and application range according to the idea of this application. In conclusion, content of this specification should not be construed as a limitation to this application.

## Claims

1. An information presentation method, wherein the method is applied to an application program deployed in an electronic shelf label device, a microcontroller unit MCU and a storage unit are deployed in the electronic shelf label device, the storage unit comprises a first flash memory unit supporting a first reading speed and a second flash memory unit supporting a second reading speed, and the first reading speed is greater than the second reading speed; and the method comprises:
receiving target data to be presented by the electronic shelf label device, wherein the target data comprises first data related to presentation of a dynamic image;
storing the first data into the first flash memory unit; and
presenting the dynamic image in a first region in a screen of the electronic shelf label device by reading the first data stored in the first flash memory unit, wherein the second flash memory unit is configured to store second data related to static content, and the static content is configured to be presented in a second region in the screen of the electronic shelf label device.

2. The method according to claim 1, wherein
the received target data further comprises the second data related to presentation of the static content; and
the method further comprises:
storing the second data into the second flash memory unit, and presenting the static content in the second region in the screen of the electronic shelf label device by reading the second data in the second flash memory unit.

3. The method according to claim 1, wherein
the first data related to the presentation of the dynamic image comprises: an image sequence comprising format data of a target quantity of images; and
presenting the dynamic image in the first region in the screen of the electronic shelf label device comprises:
sequentially performing content refreshing on the images in the image sequence based on a target time interval in a cyclic manner, to form a dynamic image effect, and presenting the dynamic image effect in the first region in the screen of the electronic shelf label device.

4. The method according to claim 3, wherein
color space of the images in the image sequence is represented by using a binary number having a target bit quantity, and the target quantity of the images and the target bit quantity are related to a size of storage space and/or a data reading speed of the first flash memory unit.

5. The method according to claim 3, wherein
the first data related to the presentation of the dynamic image further comprises: the target time interval set for the image sequence; and
sequentially performing content refreshing on the images in the image sequence based on the target time interval in the cyclic manner comprises:
sequentially performing content refreshing on the images in the image sequence based on the set target time interval in the cyclic manner.

6. The method according to claim 3, wherein
the first data related to the presentation of the dynamic image further comprises: information about cycle intermission duration set for the image sequence; and
sequentially performing content refreshing on the images in the image sequence based on the target time interval in the cyclic manner comprises:
cyclically presenting the image sequence based on the information about the cycle intermission duration, wherein the information about the cycle intermission duration is information about intermission duration between two adjacent cycles.

7. The method according to claim 1, wherein
the first data related to the presentation of the dynamic image further comprises: information about a presentation frequency set for the dynamic image; and
presenting the dynamic image in the first region in the screen of the electronic shelf label device comprises:
presenting the dynamic image in the first region in the screen of the electronic shelf label device based on the set presentation frequency.

8. The method according to claim 1, wherein
the first data related to the presentation of the dynamic image further comprises: information about a range of the first region which is set for the dynamic image; and
presenting the dynamic image in the first region in the screen of the electronic shelf label device comprises:
presenting the dynamic image in the set range of the first region in the screen of the electronic shelf label device.

9. The method according to claim 1, wherein
the first data related to the presentation of the dynamic image further comprises: information about a wandering path set for the dynamic image; and
presenting the dynamic image in the first region in the screen of the electronic shelf label device comprises:
presenting, in the first region, an effect that a position of the dynamic image changes according to the wandering path.

10. An electronic shelf label device, wherein
a microcontroller unit MCU and a storage unit are deployed in the electronic shelf label device, the storage unit comprises a first flash memory unit supporting a first reading speed and a second flash memory unit supporting a second reading speed, and the first reading speed is greater than the second reading speed; and
the storage unit stores an application program, and the application program is run based on the MCU, and performs the following processing:
receiving target data to be presented by the electronic shelf label device, wherein the target data comprises first data related to presentation of a dynamic image;
storing the first data into the first flash memory unit; and
presenting the dynamic image in a first region in a screen of the electronic shelf label device by reading the first data stored in the first flash memory unit, wherein the second flash memory unit is configured to store second data related to static content, and the static content is configured to be presented in a second region in the screen of the electronic shelf label device.

11. The electronic shelf label device according to claim 10, wherein
the storage unit of the electronic shelf label device further comprises a random access memory RAM, configured to store a wireless communication protocol stack and/or variant data required during running of the application program.

12. The electronic shelf label device according to claim 10, wherein
the screen of the electronic shelf label device is a liquid crystal display LCD screen.

13. An information presentation apparatus, wherein the apparatus is applied to an application program deployed in an electronic shelf label device, a microcontroller unit MCU and a storage unit are deployed in the electronic shelf label device, the storage unit comprises a first flash memory unit supporting a first reading speed and a second flash memory unit supporting a second reading speed, and the first reading speed is greater than the second reading speed; and the apparatus comprises:
a data receiving unit, configured to receive target data to be presented by the electronic shelf label device, wherein the target data comprises first data related to presentation of a dynamic image;
a data storage unit, configured to store the first data into the first flash memory unit; and
a dynamic image presentation unit, configured to present the dynamic image in a first region in a screen of the electronic shelf label device by reading the first data stored in the first flash memory unit, wherein the second flash memory unit is configured to store second data related to static content, and the static content is configured to be presented in a second region in the screen of the electronic shelf label device.

14. A computer-readable storage medium, storing a computer program, wherein when the program is executed by a processor, steps of the method according to any one of claims 1 to 9 are implemented.
